# DEMANDE DE BREVET EUROPEEN

(11) **EP 1 447 300 A2**
(43) Date de publication de la demande: **18.08.2004**
(21) Numéro de dépôt: 04290390.6
(22) Date de dépôt: 12.02.2004
(51) Int. Cl.: B62B 7/06

(54) **Voiture d'enfant à châssis pliant, intégrant des moyens d'aide au pliage**

(30) Priorité: 12.02.2003 FR 0301702
(71) Demandeur: AMPAFRANCE, 49309 Cholet (FR)
(72) Inventeur: M.Bruno Zweideck, 49300 Cholet (FR)
(74) Mandataire: Bioret, Ludovic

(57) **Abrégé**

L'invention a pour objet une voiture d'enfant à châssis pliant comprenant deux piètements avant (1), portant chacun au moins une roue (2), ledit châssis étant conçu de façon que, lors de son pliage, lesdits piètements avant (1) se rapprochent l'un de l'autre, au moins un desdits piètements avant (1) étant solidaire de moyens (4) d'appui au sol, montés de façon à pouvoir venir en contact avec le sol lors du pliage, et à ne pas interférer avec le sol lorsque ladite voiture d'enfant est dépliée et repose sur ses roues. Ces moyens d'appui peuvent notamment être des roulettes.

## Description

Le domaine de l'invention est celui de la puériculture, et en particulier des voitures d'enfant, ou poussettes, pliantes. Plus précisément, l'invention concerne le pliage de telles voitures d'enfant.

On connaît de nombreuses techniques de pliage de châssis de poussette. D'une façon générale, on cherche notamment à concilier au moins certains des objectifs suivants :
- efficacité du pliage, l'encombrement de la poussette pliée devant être le plus réduit possible, de façon à faciliter son rangement, et son transport, par exemple dans un véhicule automobile ;
- simplicité des manipulations de pliage et dépliage, l'utilisateur devant pouvoir effectuer ces opérations le plus facilement possible :
   - solidité et sécurité de l'enfant transporté ;
   - simplicité et faible coût de la fabrication.

Parmi les différents types de châssis connus, il existe une catégorie dite à pliage cassé. Selon cette technique, les bras poussoirs se trouvent, en position dépliée, sensiblement dans le prolongement des piétements avant, et basculent par rapport à ces derniers lors du pliage. Le plus souvent, le basculement des bras poussoirs se fait vers le bas, l'extrémité supérieure des bras poussoirs se rapprochant des roues arrière.

On connaît également des techniques selon lesquelles les bras poussoirs basculent vers le haut, de façon que l'extrémité supérieure du bras poussoir se rapproche des roues avant. Une telle technique a notamment été développée par le titulaire de la présente demande de brevet pour les poussettes dites « tout terrain », qui sont munies de roues de grande taille (par rapport aux poussettes classiques), équipés le plus souvent de pneus gonflables.

Selon une autre technique connue, chaque bras poussoir peut coulisser parallèlement au brancard avant entre une position déployée où le bras poussoir prolonge sensiblement le brancard avant et une position repliée où le bras poussoir et le brancard avant correspondant sont disposés côte à côte. Chaque brancard arrière est articulé au voisinage de son extrémité supérieure sur le brancard avant correspondant.

On connaît encore une autre technique selon laquelle le châssis est conçu pour autoriser un pliage en « fagot » de la poussette. Un tel pliage en fagot consiste à permettre le rapprochement des piètements des brancards de façon à réduire l'encombrement en largeur de la poussette une fois pliée. Cette technique peut être combinée avec certaines des techniques citées précédemment.

L'invention concerne plus particulièrement ces voitures d'enfant dont les piètements se rapprochent l'un de l'autre lors du pliage.

Selon cette approche, le pliage est généralement obtenu, après déverrouillage d'un ou plusieurs éléments de verrouillage assurant le blocage en position dépliée de la poussette, de façon à éviter tout incident avec un enfant présent dans cette dernière, en soulevant et/ou en redressant la poussette, par un élément du guidon ou par une poignée prévue à cet effet au voisinage du guidon (le guidon pouvant être formé par un élément unique ou par deux poignées indépendantes, selon les cas).

Cette opération peut être relativement difficile, notamment pour des personnes de petite taille. La réduction de la largeur du châssis (lorsque les piètements se rapprochent l'un de l'autre) induit en effet généralement une augmentation de sa longueur, c'est-à-dire en l'occurrence de sa hauteur.

Le poids de la poussette, bien que l'on vise toujours à le réduire, peut également rendre cette opération difficile (il est par exemple peu aisé de soulever la poussette d'une main, alors qu'on soutient l'enfant de l'autre main).

Tout cela se constate souvent de façon de plus en plus importante au fur et à mesure que la poussette vieillit, du fait de l'usure, de l'encrassement, de l'apparition de jeux ou de points de blocage entre des pièces en mouvement.

Au final, on constate que les utilisateurs ne lèvent pas la poussette, mais la conserve en appui sur ses roues avant. Cela peut poser deux types de problèmes de manipulation. Tout d'abord, les roues avant vont naturellement avoir tendance à rouler, et à s'éloigner de l'utilisateur, ce qui nuit bien sûr le pliage, oblige l'utilisateur à forcer, à retenir la poussette avec un pied ou à l'appuyer contre un point d'appui.

En revanche, ces roues avant s'opposent généralement au déplacement visant à rapprocher l'un de l'autre les piètements, puisque leur déplacement est alors parallèle à leur axe de rotation. Le pliage nécessite donc de lutter contre le frottement de ces roues avant sur le sol.

On constate donc que le pliage des poussettes est souvent, en pratique, peu aisé.

En outre, une fois pliée, il n'est pas possible de laisser la poussette debout par exemple en appui contre un mur, alors que cela serait souvent la solution la plus pratique. En effet, elle repose alors sur les roues avant qui, à nouveau, jouent leur rôle et entraînent la chute de la poussette. Les utilisateurs sont donc contraints le plus souvent d'étendre au sol la poussette pliée, ce qui est peu efficace en termes d'encombrement, peu ergonomique, puisque l'utilisateur doit se baisser, et suppose le contact de toute la poussette (hamac, châssis, guidon,...) avec le sol, qui peut être sale ou humide.

L'invention a notamment pour objectif de pallier ces différents inconvénients de l'art antérieur.

Plus précisément, l'invention a pour objectif de proposer une voiture d'enfant dont le pliage suppose que les piètements avant se rapprochent l'un de l'autre qui permette un pliage plus aisé.

L'invention a également pour objectif de fournir une telle voiture d'enfant, ou poussette, qui soit simple à fabriquer, à monter et à mettre en oeuvre.

Ces objectifs, ainsi que d'autres qui apparaîtront par la suite sont atteints à l'aide d'une voiture d'enfant à châssis pliant comprenant deux piètements avant, portant chacun au moins une roue, ledit châssis étant conçu de façon que, lors de son pliage, lesdits piètements avant se rapprochent l'un de l'autre. Selon l'invention, au moins un desdits piètements avant est solidaire de moyens d'appui au sol, montés de façon à pouvoir venir en contact avec le sol lors du pliage, et à ne pas interférer avec le sol lorsque ladite voiture d'enfant est dépliée et repose sur ses roues.

De cette façon, on obtient des moyens simples et efficaces pour caler la voiture, c'est-à-dire l'empêcher de rouler, tandis que l'on amorce la cinétique de pliage du châssis.

De façon préférentielle, on prévoit des moyens d'appui sur chacun desdits piètements avant.

Avantageusement, lesdits moyens d'appui sont montés de façon que, lorsqu'ils sont en contact avec le sol, les roues portées par lesdits piètements avant ne sont plus en contact avec le sol.

Préférentiellement, lesdits moyens d'appui sont montés de façon à venir en contact avec le sol lorsque lesdits piètements avant sont déplacés de façon à réduire l'angle qu'ils forment avec la verticale.

Selon un aspect avantageux de l'invention, lesdits moyens d'appui sont en outre montés de façon à s'étendre légèrement au-delà desdites roues, dans le plan horizontal, lorsque ladite voiture d'enfant est dépliée et repose sur ses roues.

Par ailleurs, lesdits moyens d'appui sont préférentiellement conçus de façon à faciliter le rapprochement desdits piètements avant.

Ainsi, lesdits moyens d'appui comprennent avantageusement au moins un élément roulant, t appartenant par exemple au groupe comprenant :
- les galets ;
- les roulettes ;
- les boules ou billes ;
- les rouleaux.

Le coefficient de frottement qui s'opposait au rapprochement des piétements avant avec les voitures de l'art antérieur est de cette façon quasiment supprimé.

On peut donc, rapprocher les piétements de la voiture sans décoller les roues du sol, ce qui n'était pas possible avec les voitures de l'art antérieur.

Globalement, une telle voiture présente donc une ergonomie optimisée, sans pliage complet pouvant être obtenu sans se pencher (évitant une fatigue ou des douleurs inutiles au niveau du dos) et sans qu'il soit nécessaire de soulever le châssis pour rapprocher les piétements l'un de l'autre, l'utilisateur pouvant en outre peser de son propre poids (la voiture étant calée) pour faire coulisser les piétements du châssis.

Selon un mode de réalisation particulier, lesdits éléments roulants sont montés à rotation autour d'un axe porté par une pièce solidaire dudit piètement, monté de telle sorte que le plan de rotation dudit ou desdits éléments roulants est parallèle ou confondu avec le plan s'étendant entre lesdits piètements.

Préférentiellement, le ou lesdits éléments d'appui s'étendent sensiblement dans le prolongement du piètement avant correspondant.

Lesdits piètements avant peuvent porter, classiquement, un bloc de deux roues. Dans ce cas, lesdits éléments d'appui sont avantageusement montés entre les deux roues d'au moins un desdits blocs.

Ladite ou lesdites roues portées par lesdits piètements avant sont, de façon avantageuse, des roues directionnelles. Dans ce cas, la voiture d'enfant comprend préférentiellement des moyens de verrouillage desdites roues dans une position fixe parallèle à l'axe principal de ladite voiture d'enfant.

Avantageusement, la voiture d'enfant comprend alors des moyens pour ramener lesdites roues dans une position fixe parallèle à l'axe principal de ladite voiture d'enfant, lors du pliage.

Ils peuvent notamment agir sur lesdits moyens de verrouillage desdites roues, et/ou comprendre des moyens de rappel.

Selon un autre mode de réalisation avantageux, on peut prévoir des moyens pour amener lesdits moyens d'appui en position de travail lors du pliage, et pour escamoter lesdits moyens d'appui lorsque ladite voiture d'enfant est dépliée.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- la figure 1 est une vue en perspective d'un brancard avant de poussette portant des moyens d'appui selon l'invention, la poussette étant dépliée ;
- les figures 2 et 3 sont respectivement des vues en perspective et de face du brancard avant de poussette de la figure 1, la poussette étant repliée.

Ainsi que cela est mentionné précédemment, un principe à la base de l'invention consiste à prévoir des moyens d'appui qui permettent de caler la poussette lors de son pliage, de façon notamment à transmettre plus facilement une force appliquée à un emplacement déterminé pour obtenir le pliage (par exemple sur le poussoir, pour entraîner des éléments coulissants du châssis), sans que la poussette se déplace, en roulant sur ses roues avant.

Selon le mode de réalisation particulier décrit plus en détail par la suite, ces éléments d'appui sont formés par des éléments roulants favorisant le pliage en fagot de la poussette.

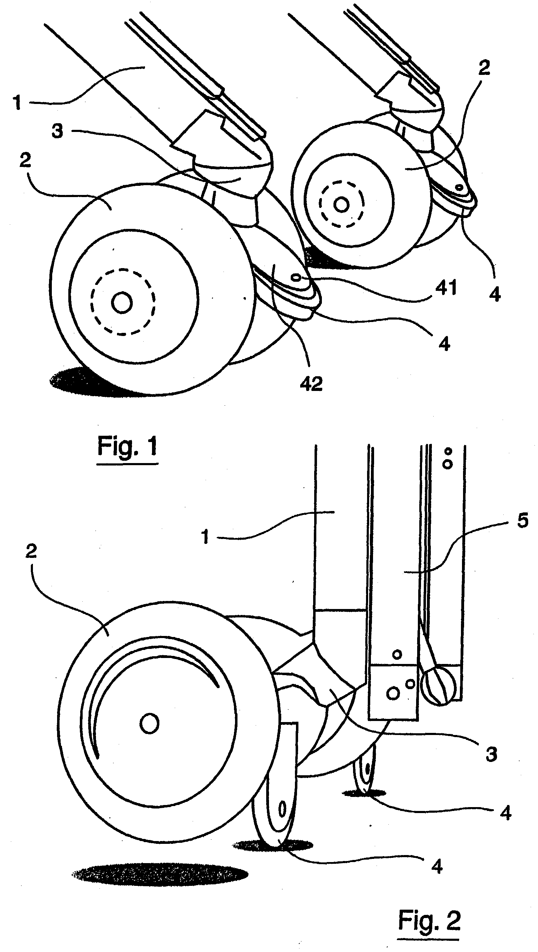

Les figures 1 et 2 illustrent une portion (correspondant aux roues avant) d'une poussette équipée d'un châssis pliant. Lors d'une manoeuvre de pliage, les opérations suivantes sont effectuées :
- ramener le brancard arrière au voisinage du brancard avant ;
- faire coulisser les bras poussoirs sur les piétements correspondants ;
- rapprocher transversalement les piétements les uns des autres,
sous l'action d'une poussée sur les poignées de guidage, ou le guidon, après que les moyens de verrouillage maintenant la poussette dans sa position déployée ont été déverrouillés.

La figure 1 illustre la position occupée par les piétements 1 du brancard avant lorsque le châssis est déplié.

Selon le présent mode de réalisation, chaque piétement 1 du brancard avant est équipé de deux roues 2 portées par un bloc-roues 3 monté libre à rotation à l'extrémité du piétement correspondant.

Selon l'invention, les piétements 1 sont pourvus chacun d'une roulette 4, dont une première fonction est de former un moyen d'appui au sol.

Cette roulette 4 est portée par un support monté sur le piètement 1, dans le prolongement de ce dernier.

Pour plier le châssis de la poussette (et notamment faire coulisser le bras poussoir 5 sur le piétement 1), on redresse classiquement la poussette. Ainsi, on fait basculer la poussette légèrement vers l'avant (réduisant l'angle formé par les piétements et la verticale), ce qui amène les roulettes 4 au contact du sol. Comme on le voit sur la figure 2, les roues avant 2 ne sont lors plus en contact avec le sol, et ne peuvent donc plus entraîner la poussette vers l'avant.

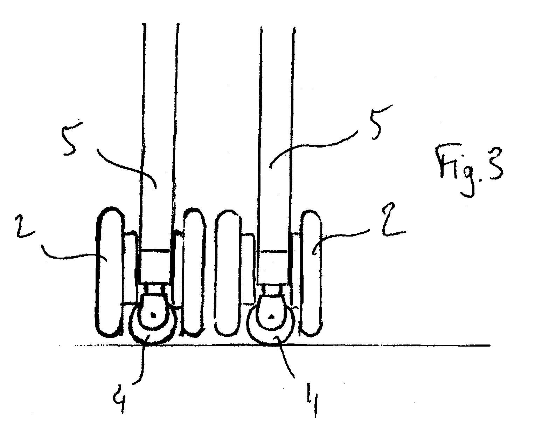

Ensuite, en maintenant la poussette dans cette position, (les organes de sécurité appropriés ayant été déverrouillés) on peut imprimer une poussée sur le bras poussoir 5 pour obtenir le pliage (en faisant coulisser celui-ci sur le piétement 1, dans le mode de réalisation décrit) et rapprocher les deux piétements l'un de l'autre, jusqu'à amener le châssis dans une position telle que celle illustrée par la figure 3.

Les roulettes 4 facilitent ce rapprochement, qui n'était, selon l'art antérieur, assuré que par le mécanisme du châssis.

Comme cela apparaît clairement sur la figure 1, l'axe de rotation 41 des roulettes est porté par deux platines 42 montées sur le bloc-roues 3 correspondant.

On note que ce montage est prévu de telle sorte que chaque roulette 4 s'étende entre les deux roues 2 du piétement correspondant.

De plus, le montage des roulettes 4 est prévu de telle sorte que leur plan de rotation soit parallèle au plan s'étendant entre les piétements.

Ainsi, on peut réaliser sans effort la manoeuvre de pliage consistant à rapprocher les piétements 1 l'un de l'autre, en procédant de la manière suivante : on fait basculer le brancard avant vers l'avant, jusqu'à mettre les roulettes 4 en appui sur le sol par l'intermédiaire de leur surface de roulement. Dans cette position, les piétements 1 sont sensiblement verticaux tels qu'illustrés par les figures 2 et 3, et reposent sur le sol exclusivement par l'intermédiaire des roulettes 4. En d'autres termes, les roues 2 sont en élévation par rapport au sol, et donc sans aucun contact avec celui-ci.

Les roues 2 ne font donc aucunement opposition au rapprochement des piétements 1 l'un de l'autre, ce déplacement étant guidé et facilité en faisant rouler les roulettes 4 l'une vers l'autre sur le sol.

Par ailleurs, la position du châssis illustrée par les figures 2 et 3 peut également correspondre à une position de rangement, la poussette étant soit en équilibre sur les roulettes 4, soit en appui contre un mur par exemple.

En appui contre un mur, on comprend que les roulettes 4 sont orientées de telle sorte qu'elles s'opposent à une mise en mouvement de la poussette sous l'effet de son propre poids, ceci à l'inverse de ce qui risquerait de se produire si les roues 2 reposaient sur le sol.

Généralement, les roues ou blocs de roues avant sont directionnels, c'est-à-dire mobiles en rotation. Pour obtenir un pliage efficace, et notamment si la roulette 4 est solidaire du bloc de roues, il faut que celui-ci s'aligne avec l'axe principal de la poussette.

Il est souvent prévu des moyens de verrouillage des roues directionnelles, pour certains types de terrains. On peut donc prévoir que le déverrouillage des sécurités anti-repliement de la poussette, lorsque l'on veut la plier, agit sur les moyens de verrouillage des roues, pour qu'ils ramènent celles-ci dans la bonne direction.

Selon une approche, éventuellement combinée avec la première, on peut équiper les roues ou blocs de roues avant de moyens de rappel, tendant à ramener les roues dans l'axe principal de la poussette. Ces moyens de rappel pourront être configurés pour ramener les roues dans cette position dès qu'elles ne touchent plus le sol.

Il est à noter par ailleurs que plusieurs variantes de mise en oeuvre de l'invention peuvent être envisagées. Notamment les roulettes peuvent être remplacées par tout autre moyen roulant, tels qu'un ou plusieurs rouleaux ou billes, une sphère, un galet...

Dans une version simplifiée, il peut également s'agir d'un élément fixe. Dans ce cas, il sera préférentiellement configuré (forme et matière) pour faciliter le repliement.

On peut également prévoir que des moyens d'appui ne soient mis en oeuvre que sur un seul piètement, ou que les moyens d'appui soient différents d'un piètement à l'autre.

## Revendications

1. Voiture d'enfant à châssis pliant comprenant deux piétements avant (1), portant chacun au moins une roue (2), ledit châssis étant conçu de façon que, lors de son pliage, lesdits piètements avant (1) se rapprochent l'un de l'autre,
**caractérisée en ce qu'**au moins un desdits piètements avant (1) est solidaire de moyens (4) d'appui au sol, montés de façon à pouvoir venir en contact avec le sol lors du pliage, et à ne pas interférer avec le sol lorsque ladite voiture d'enfant est dépliée et repose sur ses roues.

2. Voiture d'enfant selon la revendication 1, **caractérisée en ce qu'**elle comprend des moyens d'appui (4) sur chacun desdits piètements avant (1).

3. Voiture d'enfant selon l'une quelconque des revendications 1 et 2, **caractérisée en ce que** lesdits moyens d'appui (4) sont montés de façon que, lorsqu'ils sont en contact avec le sol, les roues (2) portées par lesdits piètements avant (1) ne sont plus en contact avec le sol.

4. Voiture d'enfant selon l'une quelconque des revendications 1 à 3, **caractérisée en ce que** lesdits moyens d'appui (4) sont montés de façon à venir en contact avec le sol lorsque lesdits piètements avant sont déplacés de façon à réduire l'angle qu'ils forment avec la verticale.

5. Voiture d'enfant selon l'une quelconque des revendications 1 à 4, **caractérisée en ce que** lesdits moyens d'appui (4) sont montés de façon à s'étendre légèrement au-delà desdites roues, dans le plan horizontal, lorsque ladite voiture d'enfant est dépliée et repose sur ses roues.

6. Voiture d'enfant selon l'une quelconque des revendications 1 à 5, **caractérisée en ce que** lesdits moyens d'appui (4) sont conçus de façon à faciliter le rapprochement desdits piètements avant (1).

7. Voiture d'enfant selon la revendication 6, **caractérisée en ce que** lesdits moyens d'appui comprennent au moins un élément roulant.

8. Voiture d'enfant selon la revendication 7, **caractérisée en ce que** ledit ou lesdits éléments roulants comprennent au moins un élément appartenant au groupe comprenant :
- les galets ;
- les roulettes ;
- les boules ou billes ;
- les rouleaux.

9. Voiture d'enfant selon l'une quelconque des revendications 4 à 7, **caractérisé en ce que** lesdits éléments roulants sont montés à rotation autour d'un axe (41) porté par une pièce solidaire (42) dudit piètement, monté de telle sorte que le plan de rotation dudit ou desdits éléments roulants est parallèle ou confondu avec le plan s'étendant entre lesdits piétements.

10. Voiture d'enfant selon l'une quelconque des revendications 1 à 9, **caractérisé en ce que** le ou lesdits éléments d'appui (4) s'étendent sensiblement dans le prolongement du piètement avant (4) correspondant.

11. Voiture d'enfant selon l'une quelconque des revendications 1 à 10, **caractérisée en ce que** chacun desdits piètements avant (1) porte un bloc de deux roues (2), et **en ce que** lesdits éléments d'appui (4) sont montés entre les deux roues (2) d'au moins un desdits blocs.

12. Voiture d'enfant selon l'une quelconque des revendications 1 à 8, **caractérisée en ce que** ladite ou lesdites roues (2) portées par lesdits piètements avant (1) sont des roues directionnelles.

13. Voiture d'enfant selon la revendication 12, **caractérisée en ce qu'**elle comprend des moyens de verrouillage desdites roues (2) dans une position fixe parallèle à l'axe principal de ladite voiture d'enfant.

14. Voiture d'enfant selon l'une quelconque des revendications 12 et 13, **caractérisée en ce qu'**elle comprend des moyens pour ramener lesdites roues (2) dans une position fixe parallèle à l'axe principal de ladite voiture d'enfant, lors du pliage.

15. Voiture d'enfant selon les revendications 13 et 14, **caractérisée en ce que** lesdits moyens pour ramener lesdites roues agissent sur lesdits moyens de verrouillage desdites roues.

16. Voiture d'enfant selon l'une quelconque des revendications 14 et 15, **caractérisée en ce que** lesdits moyens pour ramener lesdites roues comprennent des moyens de rappel.

17. Voiture d'enfant selon l'une quelconque des revendications 1 à 16, **caractérisée en ce qu'**elle comprend des moyens pour amener lesdits moyens d'appui en position de travail lors du pliage, et pour escamoter lesdits moyens d'appui lorsque ladite voiture d'enfant est dépliée.
